# DEMANDE DE BREVET EUROPEEN

(11) **EP 1 484 895 A1**
(43) Date de publication de la demande: **08.12.2004**
(21) Numéro de dépôt: 04102436.5
(22) Date de dépôt: 01.06.2004
(51) Int. Cl.: H04L 29/06

(54) **Procédé d'accès à un réseau ou à un service en utilisant un protocole de la famille de protocoles PPPoX, et architecture mettant en oeuvre une tel procédé**

(30) Priorité: 03.06.2003 FR 0350198
(71) Demandeur: FRANCE TELECOM, 75015 Paris (FR)
(72) Inventeur: Billon, Gilbert, 22300 Lannion (FR); Delesalle, Christophe, 22700 Perros-Guirec (FR)
(74) Mandataire: Poulin, Gérard

(57) **Abrégé**

L'invention concerne un procédé d'accès à un réseau ou à un service en utilisant un protocole de la famille des protocoles PPPoX, qui, pour une demande de connexion de la part du terminal d'un client (11), comprend :
- une étape d'authentification de celui-ci comprenant la transmission des paramètres identifiant et mot de passe de ce client et d'un paramètre d'identification de la ligne (ULID) utilisée par ce client, jusqu'à un serveur d'authentification (15),
- une étape de comparaison de ce paramètre d'identification de ligne à une valeur mémorisée dans la base de données (16) du serveur d'authentification (15) pour permettre l'acceptation ou le rejet, par ce serveur de la demande de connexion de ce client.

L'invention concerne également une architecture permettant de mettre en oeuvre un tel procédé.

## Description

### DOMAINE TECHNIQUE

La présente invention concerne un procédé d'accès à un réseau ou à un service en utilisant un protocole de la famille de protocoles PPPoX, et une architecture mettant en oeuvre un tel procédé.

### ETAT DE LA TECHNIQUE ANTERIEURE

Les opérateurs de télécommunication portent actuellement leurs efforts sur le développement de services à forte valeur ajoutée accessibles au travers de réseaux d'accès haut-débit, par exemple de services de vidéo, de jeux ou de communication multimédia. Ces nouveaux services pourront être proposés aux clients de réseau d'accès haut-débit de type ADSL par les opérateurs de télécommunication, indépendamment de tout fournisseur d'accès Internet (FAI).

Certains de ces services peuvent nécessiter des accès complètement sécurisés, notamment à l'intérieur de zones protégées ou de services sensibles sur un réseau de type réseau privé virtuel (RPV).

Les seuls procédés de sécurisation physiques de l'art connu appliqués sur des accès haut débit ADSL sont des procédés de sécurisation à posteriori (par exemple, conservation par les fournisseurs d'accès Internet des éléments décrits dans le document référencé [1] en fin de description pour chaque connexion). Une telle sécurisation est réalisée par plusieurs acteurs (opérateur, fournisseur d'accès à Internet,...) qui enregistrent les informations partielles dont ils disposent à chaque connexion : identifiant, mot de passe, début et fin de connexion, adresse IP.

Dans le cadre de la protection d'une zone réservée aux enfants, les procédés de l'art connu sont tout à fait inefficaces car ils ne permettent que de remonter trop tard jusqu'à une personne malveillante qui s'est introduite sur cette zone, mais pas de l'en empêcher. De la même façon, les procédé de l'art connu ne permettent pas d'empêcher des transactions frauduleuses sur le réseau Internet, d'autant plus que la plupart du temps ces transactions sont faites depuis l'étranger et que les chances de pouvoir remonter à la source sont infimes.

Un objet de l'invention est de proposer un procédé permettant résoudre un tel problème de sécurisation. Un autre objet de l'invention est de permettre aux fournisseurs d'accès Internet (FAI) d'offrir un niveau de sécurisation élevé à des fournisseurs de services tiers.

### EXPOSÉ DE L'INVENTION

L'invention propose un procédé d'accès à un réseau ou à un service en utilisant un protocole de la famille de protocoles PPPoX, qui, pour une demande de connexion de la part du terminal d'un client, comprend une étape d'authentification de celui-ci comprenant la transmission des paramètres identifiant et mot de passe de ce client jusqu'à un serveur d'authentification pour authentifier le client auprès du réseau ou du service,
caractérisé en ce que, pendant cette étape d'authentification, est également transmis un paramètre d'identification de la ligne utilisée par ce client, et en ce que ce procédé comprend en outre :
- une étape de vérification que ce paramètre d'identification de ligne est correct par comparaison à une valeur mémorisée dans la base de données du serveur d'authentification pour permettre l'acceptation ou le rejet, par ce serveur de la demande de connexion de ce client.

L'invention permet de subordonner l'accès à un réseau à une identification de la ligne utilisée par le client en plus des traditionnels identifiant (« login ») et mot de passe (« password »).

Une caractéristique essentielle de l'invention est ainsi constituée par le couplage fort entre l'authentification logique du client au service (authentifiant, mot de passe) et l'identification physique de la ligne utilisée par le client pour accéder à ce service (paramètre d'identification de ligne ULID). Alors que les serveurs Radius dans les documents de l'art connu ne prennent en compte que la cohérence entre l'identifiant (« login ») et le mot de passe (« password ») fournis par le client.

Dans un exemple de réalisation on a les étapes préalables suivantes :
- une étape de chargement, sur le terminal du client, d'un logiciel de gestion de connexion de type PPPoX,
- une étape de saisie du paramètre d'identification de ligne, et de l'identifiant et du mot de passe de ce client au niveau de la base de donnée du serveur d'authentification.

Suite à une demande de connexion au réseau privé virtuel de la part du client, on a les étapes suivantes :
- une étape d'émission d'un message depuis le terminal client vers un serveur d'accès BAS avec les paramètres identifiant et mot de passe du client.
- l'étape d'authentification du client avec émission d'une requête vers le serveur d'authentification, en joignant à cette requête les paramètres identifiant et mot de passe du client et un paramètre d'identification de ligne,
- après réception de cette requête par le serveur d'authentification, l'étape de vérification, que le mot de passe fourni est correct et que le client effectue un accès depuis un accès autorisé,
- une étape de validation du mot de passe et de l'accès depuis lequel le client veut se connecter, par envoi du serveur d'authentification au serveur BAS d'un message,
- une étape d'attribution d'une adresse IP au client et de transmission de celle-ci dans un message, et une étape d'émission simultanée d'un message de début de comptage,
- une étape de réception par le client de son adresse IP.

L'invention concerne également une architecture mettant en oeuvre ce procédé de l'invention, dans laquelle un réseau de distribution ADSL relie un terminal client et un serveur BAS, et dans laquelle un réseau dorsal relie ce serveur BAS au routeur d'une plate-forme de service, cette plate-forme de service comprenant le serveur Radius et la base de données.

Le domaine de l'invention est notamment celui de la sécurisation des accès haut-débit de type ADSL qui utilisent la famille de protocoles PPPoX (PPP, PPPoA, PPPoE,...) pour accéder à des réseaux ouverts tels que le réseau Internet ou fermés tels que les réseaux Intranet.

Mais l'invention peut s'appliquer à tous les réseaux d'accès haut-débit sans limitation, dès lors qu'un protocole de type PPPoX est utilisé par le client pour se connecter au réseau ou au service. Par exemple, des applications à des réseaux de type UMTS ou WiFi peuvent être prévues. Le procédé de l'invention reste identique même si les éléments intervenant dans la génération et la transmission du paramètre d'identification de ligne unique (ULID) aux serveurs Radius chargés de l'authentification des clients sont différents.

### BRÈVE DESCRIPTION DES DESSINS

La figure 1 illustre un exemple d'architecture permettant de mettre en oeuvre le procédé de l'invention.

La figure 2 représente un échange de messages réalisé dans l'architecture de la figure 1 illustrant les différentes étapes du procédé de l'invention.

### EXPOSÉ DÉTAILLÉ DE MODES DE RÉALISATION PARTICULIERS

L'invention concerne un procédé d'accès à un réseau ou à un service, en utilisant un protocole de la famille des protocoles PPPoX, qui, pour une demande de connexion de la part d'un client, comprend :
- une étape d'authentification de celui comprenant la transmission des paramètres identifiant et mot de passe de ce client et d'un paramètre d'identification de la ligne (ULID) utilisée par ce client jusqu'à un serveur d'authentification pour authentifier le client auprès du réseau ou du service,
- une étape de vérification que ce paramètre d'identification de ligne est correct par comparaison à une valeur mémorisée dans la base de données du serveur d'authentification pour permettre l'acceptation ou le rejet, par ce serveur, de la demande de connexion de ce client.

Dans la suite de la description, on considère, à titre d'exemple, un accès à un réseau privé virtuel, une plate-forme de service 17 permettant de créer un tel réseau entre tous les clients connectés.

L'adhérence à l'accès sur un réseau, par exemple haut-débit, représentant la capacité d'un système à subordonner l'accès d'un client sur ce réseau à l'identification de la ligne utilisée par le client pour cet accès, l'invention décrit un procédé qui peut être employé pour gérer l'adhérence à tout réseau pour des clients utilisant un protocole de type PPPoX pour se connecter.

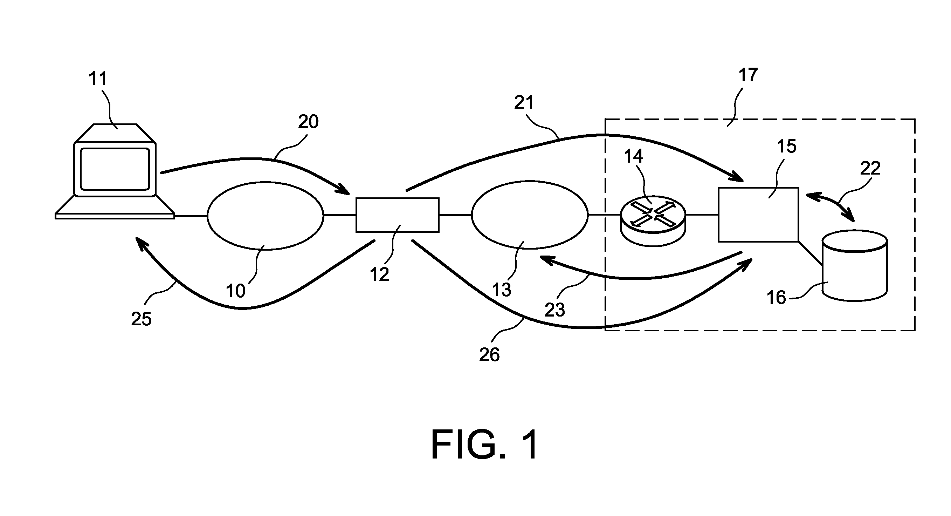

La figure 1 illustre un exemple d'architecture permettant de mettre en oeuvre le procédé de l'invention. Un réseau de distribution ADSL 10 relie un terminal client 11 et un serveur BAS (accès large bande) 12. Un réseau dorsal, ou réseau de transmission, 13 relie ce serveur BAS 12 à une plate-forme de service 17. Cette plate-forme de service 17 comprend un routeur 14 auquel est relié le serveur Radius 15, lui-même connecté à une base de données 16 contenant identifiant (« login »), mot de passe (« password »), et paramètre d'identification de ligne (CLID). Cette plate-forme de service 17 permet de créer un réseau privé virtuel entre tous les clients connectés.

Certains éléments du réseau d'accès ADSL, tel le serveur BAS 12, sont capables de générer le paramètre d'identification de ligne (ULID) correspondant à chaque demande de connexion PPPoX et de transmettre ce paramètre au serveur Radius 15 directement ou indirectement par l'intermédiaire d'un serveur proxy Radius, qui permet de réaliser une transmission vers ce serveur Radius déterminé 15. Ce même serveur BAS 12 est aussi capable de fournir des éléments d'identification réseau à un serveur proxy Radius évolué, capable de générer le paramètre d'identification de ligne (ULID) à partir d'éléments d'identification reçus, et de transmettre ce paramètre au serveur Radius 15 qui réalise l'authentification des clients.

Le client peut utiliser le paramètre d'identification de ligne d'appel CLID comme paramètre d'identification de ligne unique ULID au niveau du serveur Radius 15. Ce paramètre d'identification de ligne CLID comporte une chaîne de caractères identifiant de façon unique, à un instant précis, l'accès utilisé. Il serait également possible de passer par un serveur proxy Radius non représenté sur la figure 1, pour translater le paramètre d'identification de ligne CLID en paramètre identification de ligne ULID avant de retransmettre ce paramètre d'identification de ligne ULID au serveur Radius 15.

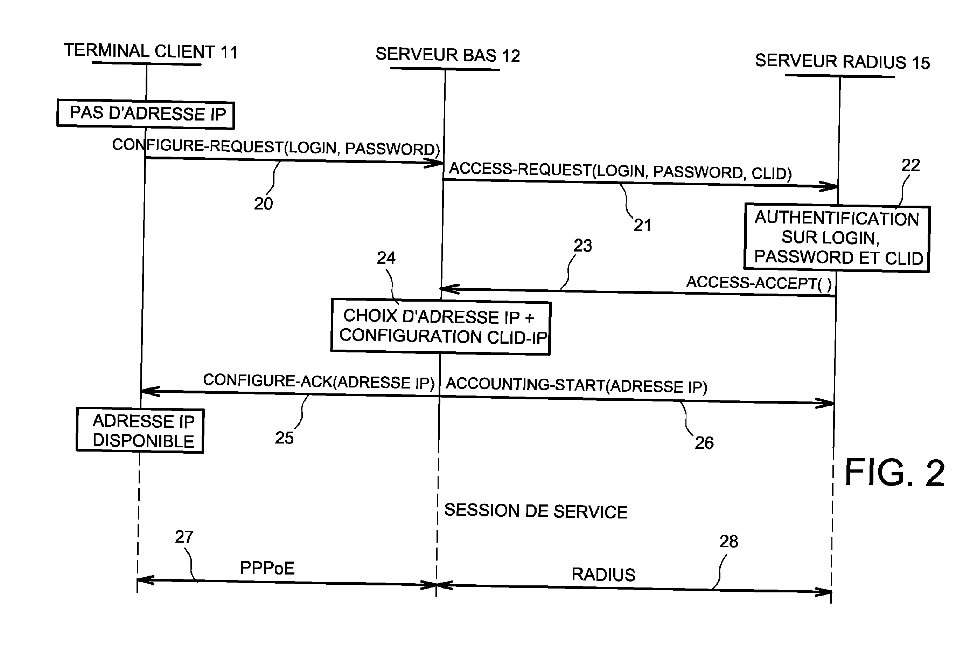

La figure 2 représente un échange de messages réalisé dans l'architecture de la figure 1, permettant d'illustrer la succession des étapes du procédé de l'invention.

Les pré-requis à ces différentes étapes sont que :
- le client dispose sur son terminal 11 d'un logiciel client de type PPPoX pour se connecter à la plate-forme 17,
- le paramètre d'identification de ligne CLID a été saisi en même temps que l'identifiant et que le mot de passe de ce client au niveau de la base de données 16 du serveur Radius 15.

Suite à la demande de connexion au réseau privé virtuel de la part du client, les messages échangés et les traitements sont les suivants :
- Une phase de découverte du serveur BAS 12, non décrite ici (document référencé [2]), est initialisée si le protocole PPPoX utilisé est le protocole PPPoE.
- Une phase d'exécution de la procédure PPPoX ne concernant pas l'authentification du client, classique pour un homme de métier et non décrite ici (document référencé [3]), est réalisée.
- La phase d'authentification commence par l'émission d'un message « Configure-Request » 20 émis depuis le terminal client 11 vers le serveur BAS 12 avec les paramètres identifiant (« login ») et mot de passe (« password ») du client.
- Le serveur BAS 12 démarre le processus d'authentification du client en émettant une requête « Radius Access-Request » 21 vers le serveur Radius 15, en joignant à cette requête les paramètres identifiant et mot de passe transmis par le client, ainsi qu'un paramètre d'identification de ligne CLID utilisé par le client pour cette demande de connexion.
- Le serveur Radius 15 reçoit cette requête 21, et vérifie, en 22, que le mot de passe fourni est correct et que le client accède bien au réseau privé virtuel depuis un accès autorisé par comparaison du paramètre d'identification de ligne CLID reçu et du paramètre d'identification de ligne CLID enregistré dans la base de données 16.
- Si le serveur Radius 15 valide le mot de passe et l'accès depuis lequel le client veut se connecter, il renvoie au serveur BAS 12 un message « Access-Accept » 23.
- Ce serveur BAS 12 attribue alors, en 24, une adresse IP au client et la lui transmet dans un message « Configure-Ack » 25. Il envoie, en même temps, un message 26 de début de comptage à la plate-forme de service 17.
- Le client reçoit son adresse IP.

Les paramètres d'identification sont transmis du terminal client 11 au serveur Radius 15 en utilisant un protocole de type PPPoX par exemple PPPOE, référencé 27 entre le terminal 11 et le serveur BAS 12, et un protocole Radius, référencé 28 entre ce serveur BAS 12 et le serveur Radius 15.

Le serveur Radius 15 a donc sécurisé de façon importante les accès aux ressources du réseau privé virtuel en réalisant une vérification de l'accès utilisé par le client pour se connecter.

Le mode de réalisation présenté sur les figures 1 et 2 ne constitue qu'un exemple de mode de réalisation de l'invention parmi d'autres. L'invention, en effet, porte sur le traitement réalisé par le serveur Radius 15 et non sur la technologie et l'architecture du réseau d'accès.

Dans ce procédé l'authentification considérée est basée sur un modèle ouvert : attribution d'adresse IP par le serveur BAS 12. Il serait également possible de réaliser une authentification en modèle fermé : attribution d'adresse IP par le serveur Radius 15.

Le domaine privilégié dans lequel l'invention peut être utilisée concerne la sécurisation des accès haut-débit aux réseaux Internet et Intranet. Ainsi, l'invention est particulièrement pertinente dès lors qu'elle sert à sécuriser l'accès à des zones protégées, ou services sensibles, ou à garantir des transactions financières par exemple. En effet, elle permet de gérer une sécurisation physique absolue (accès à une ligne téléphonique) par rapport à une simple sécurisation traditionnelle logique par identifiant et mot de passe.

L'invention peut ainsi, à titre d'exemple, être utilisée dans les domaines suivants :

### - Protection de l'enfance

Lorsque le service concerne l'accès à un réseau Intranet dédié aux enfants, l'invention permet d'empêcher à des individus malveillants, disposant d'identifiant et de mot de passe valides, de s'introduire dans une zone protégée. Les enfants sont également responsabilisés par rapport à leurs actes dans le sens où ils ne peuvent pas utiliser l'identifiant ou le pseudonyme d'un autre enfant.

### - Télétravail

L'invention est toute aussi opportune dans le cadre du télétravail dans la mesure où elle valide le fait qu'un employé ne peut accéder aux ressources du réseau Intranet de son entreprise que depuis son domicile, contrairement à un travailleur nomade qui doit pouvoir se connecter à son entreprise depuis n'importe quel endroit.

### - Transactions financières et « e-commerce »

Dès lors qu'un fournisseur d'accès à Internet met en oeuvre l'invention, tous les clients de ce fournisseur d'accès à Internet sont certifiés comme accédant au réseau Internet depuis leur domicile. Toute contestation sur un achat ou une transaction bancaire doit alors être étayée par la preuve, fournie par le client, qu'une personne tierce malfaisante, s'étant introduite au domicile du client, est à l'origine du cas litigieux. Le préjudice est alors pris en charge par les assurances du domicile du client, et non par les vendeurs ou les banques.

### Exemples de deux services mettant en oeuvre l'invention

Le premier service est un service spécialement dédié aux adolescents et aux enfants afin de leur permettre de communiquer et de se divertir à partir de fonctionnalités et d'une interface adaptées à leur âge. Il enrichit les usages non-Internet liés au Haut débit. Ce service tient compte des attentes des moins de 18 ans.

Pour cela ce premier service propose des activités situées dans le domaine multimédia. Ce premier service est constitué de différents services accessibles à travers un client pris dans la classe d'âge cible. Ce premier service offre les services suivants :
- un service de messagerie multimédia instantanée (audio et vidéo), associé à un visage parlant,
- un service de questionnaire (« quiz »),
- un service espace création,
- un service de discussion,
- un service de forum,
- un service de téléchargement de jeux, vidéos, musique (« streaming »).

Le second service vise à intégrer des fonctionnalités à valeur ajoutée, dites « adhérentes à l'accès fixe », pour offrir de nouveaux services innovants à ses clients et ainsi développer de nouveaux usages.

Ce second service a pour but de faciliter l'accès à des informations et à des services pratiques et/ou ludiques de proximité grâce à la géo-localisation de la ligne.

Ce second service est également un espace de communication interne couplé avec un répertoire et un agenda familial. Il permet de plus :
- un échange de messages (« mails »),
- une saisie simplifiée : écriture / dessin sur écran tactile,
- un envoi de messages SMS vers les mobiles,
- une réception de messages SMS mobile et fixe.

Ce second service est proposé au travers d'un terminal convivial, localisé dans la maison et non nomade, et s'appuyant sur une installation de passerelle domestique et d'un réseau local domestique dans la continuité de la ligne fixe haut débit.

### ACRONYMES

BAS......"Broadband Access Server" ou "Serveur d'accès large bande"
CLID......"Calling Line ID" ou "identificateur de ligne d'appel"
DSL......"Digital Subscriber Line" ou "ligne d'abonné numérique"
FAI......"Fournisseur d'Accès à Internet"
GPRS......"General Packet Radio Service" ou "service général de transmission radio en mode paquet"
GSM......"Global System for Mobile communications" ou "Système global de communication avec des mobiles"
PPP......"Point to Point Protocol" ou "protocole point à point"
PPPoA......"PPP over ATM" ou "protocole PPP en mode de transfert asynchrone"
PPPoE .......... "PPP over Ethernet" ou "protocole PPP en norme Ethernet"
PPPoX......"famille de protocoles PPP, PPPoA, PPPoE..."
RADIUS......"Remote Authentification Dial In User Service" ou "Serveur d'authentification centralisé"
RNIS......"Réseau Numérique à Intégration de Service"
RPV......"Réseau Privé Virtuel"
RTC......"Réseau Téléphonique Commuté"
SMS......"Short Message System" ou "Petit message textuel"
ULID......"Unique Line ID" ou "identificateur de ligne unique"
UMTS......"Universal Mobile Telecommunication System" ou "Système universel de télécommunication avec des mobiles"
WiFi......"Wireless Fidelity" ou "fidélité sans fil"
xDSL......toute technologie de type DSL : ADSL ("Asymmetric DSL" ou "DSL asymétrique"), VDSL ("Very high speed DSL" ou "DSL très haut-débit"), SDSL ("Symmetric DSL" ou "DSL symétrique"),...

### REFERENCES

**[1]** Europol Wishlist, "List of minimum and optional data to be retained by Service Providers and Telcos", http://stop1984.com/index2.php?lang=fr&text=letter retained data.txt.fr.
**[2]** L. Mamakos, K. Lidl, J. Evarts, D. Carrel, D. Simone, R. Wheeler, "A Method for transmitting PPP Over Ethernet (PPPoE)", RFC2516, Février 1999, pages 1-17.
**[3]** W. Simpson, "The Point-to-Point Protocol (PPP)", STD51 RFC 1661, Juillet 1994, pages 1-52.

## Revendications

1. Procédé d'accès à un réseau ou à un service en utilisant un protocole de la famille des protocoles PPPoX, qui, pour une demande de connexion de la part du terminal d'un client (11), comprend une étape d'authentification de celui-ci comprenant la transmission des paramètres identifiant et mot de passe de ce terminal (11) jusqu'à un serveur d'authentification (15) pour authentifier le client auprès du réseau ou du service,
**caractérisé en ce que**, pendant cette étape d'authentification, est également transmis un paramètre d'identification de la ligne (ULID) utilisée par ce client, et **en ce que** ce procédé comprend en outre :
- une étape de vérification que ce paramètre d'identification de ligne est correct par comparaison à une valeur mémorisée dans la base de données (16) du serveur d'authentification (15) pour permettre l'acceptation ou le rejet, par ce serveur de la demande de connexion de ce client.

2. Procédé selon la revendication 1, dans lequel on a les étapes préalables suivantes :
- une étape de chargement, sur le terminal (11), d'un logiciel de gestion de connexion de type PPPoX,
- une étape de saisie du paramètre d'identification de ligne (CLID), et de l'identifiant et du mot de passe de ce client au niveau de la base de donnée (16) du serveur d'authentification (15).

3. Procédé selon la revendication 2 dans lequel, suite à une demande de connexion de la part du client, on a les étapes suivantes :
- une étape d'émission d'un message (20) depuis le terminal (11) vers un serveur d'accès BAS (12) avec les paramètres identifiant et mot de passe du client.
- l'étape d'authentification du client avec émission d'une requête (21) de ce serveur BAS (12) vers le serveur d'authentification (15), en joignant à cette requête les paramètres identifiant et mot de passe du client et un paramètre d'identification de ligne (CLID),
- après réception de cette requête (21) par le serveur d'authentification (15), l'étape de vérification que le mot de passe fourni est correct et que le client effectue un accès depuis un accès autorisé,
- une étape de validation du mot de passe et de l'accès depuis lequel le client veut se connecter, par envoi du serveur d'authentification (15) au serveur BAS (12) d'un message (23),
- une étape d'attribution d'une adresse IP au client et de transmission de celle-ci dans un message (24), et une étape d'émission simultanée d'un message (25) de début de comptage,
- une étape de réception par le client de son adresse IP.

4. Procédé selon la revendication 1, dans lequel l'accès est un accès haut-débit de type ADSL.

5. Procédé selon la revendication 1, dans lequel le réseau est un réseau ouvert de type Internet.

6. Procédé selon la revendication 1, dans lequel le réseau est un réseau fermé de type Intranet.

7. Architecture mettant en oeuvre le procédé de l'invention selon l'une quelconque des revendications précédentes, dans laquelle un réseau de distribution ADSL (10) relie un terminal client (11) et un serveur BAS (12), dans laquelle un réseau dorsal (13) relie ce serveur BAS (12) au routeur d'une plate-forme de service (17), cette plate-forme de service comprenant le serveur Radius (15) et la base de données (16).
